# EUROPÄISCHE PATENTSCHRIFT

(11) **EP 0 418 211 B1**
(45) Veröffentlichungstag und Bekanntmachung des Hinweises auf die Patenterteilung: **16.03.1994**
(21) Anmeldenummer: 90890239.8
(22) Anmeldetag: 09.08.1990
(51) Int. Cl.: G01D 5/34, G01D 5/26

(54) **Inkrementales Messsystem**
Incremental measuring system
Système de mesure incrémental

(30) Priorität: 12.09.1989 AT 2127/89
(43) Veröffentlichungstag der Anmeldung: 20.03.1991
(73) Patentinhaber: Rieder, Heinz, A-5120 St. Pantaleon (AT); Schwaiger, Max, A-5121 Ostermiething 298 (AT)
(72) Erfinder: Rieder, Heinz, A-5120 St. Pantaleon (AT); Schwaiger, Max, A-5121 Ostermiething 298 (AT)
(74) Vertreter: Hübscher, Heiner, Dipl.-Ing.

(56) Entgegenhaltungen:
- DE-A- 2 349 944
- FR-A- 2 240 435
- GB-A- 955 045
- GB-A- 1 156 991
- PATENT ABSTRACTS OF JAPAN, Band 13, Nr. 520 (P-963)[3868], 21. November 1989; & JP-A-1 212 316

## Beschreibung

Die Erfindung betrifft ein inkrementales Meßsystem nach dem Oberbegriff des Patentanspruches 1 und ein Verfahren zum Abgleich der photoelektrischen Empfänger bei einem solchen inkrementalen Meßsystem.

Entsprechende Meßsysteme können in ähnlicher Bauart bei Verwendung eines kreisförmigen Maßstabes und eines entsprechend zylindrisch ausgebildeten Schutzgehäuses auch als Drehmelder gebaut werden.

Die prinzipielle Bauform solcher Meßsysteme ist z. B. aus den Druckschriften Dr. Johannes Heidenhain, Traunreut, "Inkrementaler Drehgeber" ROD 6/77.2, August 1969, Inkrementales Linearmeßsystem", LID 1/92.21, September 1968, und "Gekapseltes inkrementales Linearmeßsystem", LIDA 55.10, Mai 1969, zu entnehmen.

Bei derartigen Meßsystemen wird die Meßteilung des Maßstabes über die Abtastgitter im Durchlichtverfahren abgetastet. Die Verwendung einer einzigen Lichtquelle hat den Vorteil eines geringen Leistungsbedarfes und einer einigermaßen gleichmäßigen Ausleuchtung des Meßfeldes, doch ergibt sich durch die der Lichtquelle nachzuordnende Projektionsstrecke bis zum Kondensor ein beträchtlicher Platzbedarf und damit eine große Lichtweite des rohrförmigen Schutz- und Trägergehäuses bzw. eine entsprechend große Länge des Drehgebergehäuses. Es ist zwar bekannt, das Licht über optische Lichtleitfasern zuzuführen, doch wird dadurch die Gesamtanordnung aufwendig und es treten beträchtliche Lichtverluste auf. Bei einer Abtastung im Auflichtverfahren unter Verwendung eines Maßstabbandes, wobei die Abtasteinheit an der Decke des Schutzgehäuses, die in ihrer Mitte das Maßstabband abstützt, ist es an sich bekannt, die Lichtquelle der Beleuchtungseinrichtung im Längsabstand von der Abtaststelle auf der Abtasteinheit anzuordnen und den Lichtkegel der Lichtquelle über einen Spiegel zu falten. Dabei ergibt sich eine große Baulänge für die Abtasteinheit mit entsprechenden Führungs- und Ankoppelungsproblemen an einen Mitnehmer für die Abtasteinheit. Die Anordnung ist, wie erwähnt, nur bei an der Decke des Rohrgehäuses horizontal angeordnetem Maßstabband mit reflektierender Meßteilung möglich. Bei Verwendung einer einzigen Lichtquelle stößt bisher der Abgleich der fotoelektrischen Empfänger auf Schwierigkeiten. Fotoelektrische Empfänger haben oft beträchtlich voneinander abweichende Empfangscharakteristika, die bei gleicher Beleuchtung zu Signalunterschieden bis zu 15% führen können. Es ist bisher üblich, zum Ausgleich solcher Signalunterschiede den einzelnen Empfängern nachgeschaltete Anordnungen mit einstellbaren Potentiometern zu verwenden, um z.B. bei einer üblichen paarweisen Antiparallelschaltung der Empfänger den sonst auftretenden Gleichstromanteil im Signal zu unterdrücken. Neben Unterschieden in der Signalhöhe tritt als weiterer Fehler der sogenannte Phasenfehler auf, was bedeutet, daß die Phasenabstände der über die gegeneinander um Teilungsbruchteile versetzten Abtastgitter an den Empfängern erzeugten Signale nicht den Sollwerten von üblicherweise 90 bzw. 180° entsprechenden, sondern von diesen Sollwerten abweichen. Auch für den Abgleich dieses Phasenfehlers werden den Empfängern nachgeordnete Ausgleichschaltungen verwendet, die aufwendig sind und überdies, ebenso wie Potentiometer, alterungsbedingten Änderungen unterliegen, wobei in Betracht zu ziehen ist, daß sich auch die Gesamtbeleuchtungsstärke durch Änderung der Leistungsfähigkeit der Lichtquelle oder der optischen Durchlässigkeit der vom Licht durchsetzten Medien ändert. Die Signalform der erzeugten Signale kann bei einfacheren Meßanordnungen kaum, bei aufwendigen Anordnungen, insbesondere unter Verwendung eines Mirkoprozessors, auf eine gewünschte Sollform, z.B. reine Sinusform oder Dreieckform, gebracht werden, wobei auch hier ein großer Schaltungs- bzw. Einstellaufwand erforderlich wird.

Z.B. aus der DE-A-23 49 944 ist es an sich bekannt, den Maßstabkörper so anzuordnen, daß er schräg, insbesondere unter 45° geneigt von der vom Schlitz abweisenden Seite her in den Hohlraum des Trägergehäuses einragt. Dabei kann die gesamte Abtasteinheit oder auch nur die die Abtastgitter enthaltende Abtastplatte unmittelbar auf dem frei in den Hohlraum eiragenden Maßstabkörper geführt werden, wobei vorzugsweise eine spielfreie Kupplung der Abtasteinheit mit dem zum Meßwertaufnehmer an der Werkzeugmaschine od.dgl. führenden Mitnehmer angestrebt wird. Bei dieser bekannten Anordnung werden die Abtastplatte und die fotoelektrischen Empfänger an der Unterseite des Maßstabkörpers geführt und Tür Jeden Empfänger ist eine eigene Beleuchtungseinrichtung in Form einer Fotodiode vorgesehen, die an einem eigenen Träger an der anderen Seite des Maßstabes gehalten wird. Hier kann man einzelne Fotodioden für sich in ihrem Abstand vom Maßstab einstellen und damit die Beleuchtungsstärke des zugeordneten Fotoempfängers individuell ändern, doch ist diese Anordnung nur dann möglich, wenn große Abstände der einzelnen Abtastgitter, Empfänger und Beleuchtungseinrichtungen voneinander eingehalten werden, so daß sich insgesamt gesehen ein großer Platzbedarf, eine große benötigte Lichtleistung und ein aufwendiger Aufbau ergeben. Bei der Beleuchtung von Fotoempfängern durch individuell zugeordnete Lichtquellen ist es auch bekannt, die z.B. aus Fotodioden bestehenden Lichtquellen in Lochplatten anzuordnen, wobei die tatsächliche Lichtabgabe durch in die Blendenlöcher einragende Schrauben od.dgl. eingestellt werden kann. Der Abgleich ist hier aber ungenau und mit großem Justieraufwand verbunden. Voraussetzung ist selbstverständlich eine entsprechend großvolumige Bauweise.

Bei der Ausführung nach der DE-A-23 49 944 ist die Schräganordnung des Maßstabes vorgesehen, um die Führung und Andrückung der unmittelbar am Maßstabkörper geführten Abtasteinheit zu erleichtern.

Aus den Patent Abstracts of Japan, Band 13, Nr. 520, JP-A-1 212 316, ist es bei einem Codierer mit feststehender Schlitzplatte und gegenüber dieser verstellbarer, einen Maßstab bildenden Schlitzplatte bekannt, die Schlitzplatten im Durchlichtverfahren mit dem Licht einer punktförmigen Lichtquelle abzutasten, wobei an der Rückseite der feststehenden Schlitzplatte ein Photoempfänger angeordnet ist und der Lichtstrahl der punktförmigen Lichtquelle über einen in einem Rohr angebrachten Reflektor gefaltet wird. Dabei strahlt die Lichtquelle in schrägem Winkel nach einer von den Schlitzplatten abweisenden Seite ab. Eine Kapselung des gesamten Codiersystems in einem gemeinsamen Gehäuse ist weder vorgesehen noch möglich.

Aus der GB-A-1 156 991 ist eine sich ebenfalls von Meßsystemen der gegenständlichen Art unterscheidende Meßeinrichtung bekannt, bei der Maßstab und Ableseeinheit in voneinander getrennten und gegeneinander verschiebbaren Bauteilen untergebracht sind. Die Ableseeinheit bildet ein Projektionsmikroskop, dessen Projektionsstrahl in einen als optisches Umlenkprisma mit trapezförmigem Querschnitt ausgebildeten Maßstab um 180° umgelenkt und zusätzlich in Richtung der Maßstabbreite versetzt wird, so daß in einem Bereich des Maßstabes die Lichteinleitung und darüber die Lichtausleitung zu einem Meßsystem erfolgt. Durch die Meßteilung werden empfängerseitig sowohl eine Mattscheibe mit Ablesegittern als auch Ablesedioden beleuchtet, wobei jeweils die beleuchteten Dioden direkt dem erfaßten Maß zugeordnet sind. Ein der Lichtquelle nachgeordneter Kondensor ist im Abstand von der Lichtquelle in der direkten Projektionsrichtung der Lichtquelle angeordnet. Es muß also beim Bau der volle Projektionsabstand zwischen Lichtquelle und Kondensor eingehalten werden. Eine entsprechend große Projektionsstrecke wird in diesem Fall in der Ableseeinheit auch für das ausfallende, die Projektion des Maßstabes enthaltende Lichtbündel benötigt, so daß sich eine beträchtlich Bautiefe für die Ableseeinheit ergibt.

Aufgabe der Erfindung ist hauptsächlich die Schaffung eines Meßsystems der eingangs genannten Art, das die Möglichkeiten der Beleuchtung über eine einzige Lichtquelle bei entsprechend kleiner Bauweise und gedrängter Anordnung der Empfänger mit den Vorteilen einer möglichen Führung der Abtasteinheit am Maßstabkörper vereinigt, wobei trotzdem eine kleinvolumige Bauweise, insbesondere geringe Breitenabmessungen des Trägergehäuses möglich sind. Eine Teilaufgabe der Erfindung besteht in der Schaffung eines Abgleichverfahrens, das einen bleibenden genauen Signalabgleich und im Bedarfsfall auch die Einstellung einer gewünschten Signalform bei dem Meßsystem ermöglicht.

Die Hauptaufgabe der Erfindung wird durch die Merkmale des Patentanspruches 1 gelöst.

Der Lichtkegel wird durch wenigstens einen seitlichen Reflektor gefaltet. Im Zusammenwirken mit der Schräganordnung des Maßstabes, der Anbringung der Photoempfänger an der Maßstabrückseite und dem Kondensor wird innerhalb des Schutzgehäuses ein sonst als Totraum anfallender Raum für die Unterbringung des Lichtkegels bzw. der entsprechenden Projektionsstrecke ausgenützt, so daß sich gegenüber den bisherigen entsprechenden Meßsystemen gemäß dem Oberbegriff des Patentanspruches 1 eine wesentliche Verringerung des Platzbedarfes ergibt. Es ergibt sich sogar insgesamt ein geringerer Gesamtplatzbedarf als bei den mit gesonderten Photodioden für jeden Empfänger arbeitenden Meßsystemen. Praktisch braucht die Innenbreite des Schutzgehäuses nur unwesentlich, nämlich um die Trägerbreite für die an der Maßstabrückseite anzubringenden Empfänger der Abtasteinheit größer zu sein als die Projektionsbreite des Maßstabkörpers in Richtung auf den Durchführungsschlitz.

Eine vorteilhafte Ausgestaltung des Meßsystems ist im Patentanspruch 2 angegeben. Es wird hier möglich, die Abtasteinheit so zu bauen, daß ihr Querschnitt mit den notwendigen Elementen einschließlich dem Projektionsweg des Lichtkegels den Großteil des zur Verfügung stehenden Hohlraumes des Trägergehäuses ausfüllt, wobei sich unterhalb der untersten Kante der für die Führung am Maßstab erforderlichen Bauteile der Abtasteinheit nur mehr ein geringer Raumbedarf ergibt.

Bevorzugt wird eine Ausführung nach Anspruch 3. Durch die Relativverstellung wird es bei- spielsweise bei Verwendung einer "schielenden" Fotodiode als Lichtquelle möglich, die relativ günstigste Beleuchtung der Fotoelemente einzustellen. Es können auch mögliche Abweichungen der Sollagen der Abtastgitter der Abtastplatte gegenüber der Meßteilung ausgeglichen werden.

Bei einer Ausführungsform nach Anspruch 4 bleibt die Abstützung des Bauteiles mit eigenen Gleitern oder Rollen und die meist erwünschte Parallellage der Hauptfläche der Abtastplatte zur Hauptfläche des Maßstabes erhalten.

Konstruktive Weiterbildungen entnimmt man den Ansprüchen 5 und 6. Nach den notwendigen Einstellungen werden hier die beiden Elemente der Abtasteinheit bleibend gegeneinander fixiert.

Es wurde bereits erwähnt, daß bisher bei einer Beleuchtung über eine einzige Lichtquelle und insbesondere bei einer kleinen Bauweise der Fotoelemente (beispielsweise 1 x 2 mm) kaum ein Abgleich Ober die Beleuchtungsstärke möglich erschien. Bei der erfindungsgemäßen Anordnung wird Jedoch ein neuer Weg bei Meßsystemen mit über einen Reflektor gefaltetem Lichtkegel beschritten.

Die Teilaufgabe der Erfindung wird durch das Verfahren gemäß Anspruch 7 gelöst.

Durch diese Einstellung der Beleuchtungsstärke können die an den einzelnen fotoelektrischen Empfängern auftretenden Meßsignale auf gleiche Signalhöhe gebracht werden, so daß bei Antiparallelschaltungen der Gleichstromanteil im Ausgangssignal wegfällt und nachgeordnete Ausgleichsschaltungen überflüssig werden. Es können nach Anspruch 8 auch die Phasenabstände der an den fotoelektrischen Empfängern auftretenden Signale eingestellt werden. Durch gezielte Änderung der Reflexionseingeschaften der den einzelnen Empfängern zugeordneten Bereiche des Reflektors wird es auch möglich, die Signalform der erzeugten Signale zu beeinflussen und einzustellen, also z.B. sinusförmige oder dreieckförmige Signale zu erzeugen. Die Änderung der Reflexionseigenschaften erfolgt vorzugsweise durch Verringerung dieser Reflexionseigenschaften in einzelnen Bereichen, z.B. durch punkt- oder strichförmige Auslöschung einzelner Bereiche des Reflektors in einem vorgewählten Muster.

Eine bevorzugte Weiterbildung des Verfahrens ist im Anspruch 9 angegeben

Die empirische Ermittlung der interessierenden Reflexionsbereiche gemäß Anspruch 10 kann durch Beobachtung oder auch durch Aufbringen einer lichtempfindlichen Fotoschicht auf einen Prüfreflektor erfolgen, die dann belichtet und entwickelt wird. Durch teilweise Abtragung dieser so ermittelten Zonen in einem gewählten Muster kann, wie erwähnt, der Phasenabstand die Signalhöhe und die Signalform beeinflußt werden. Die einzelnen Zonen können auch nach den Gesetzen der Optik durch Berechnung festgelegt werden.

Eine bevorzugte Weiterbildung ist im Anspruch 11 angegeben.

Für die Serienfertigung ist es hier möglich, einen Steuercomputer für den Laserstrahl einzusetzen, wobei dieser Steuercomputer so programmiert wird, daß er zu den ihm zugeführten unabgeglichenen Meßsignalen die abzutragenden Bereiche der Reflexionsschicht errechnet bzw. aus entsprechend vorgespeicherten Daten auswählt und den Laserstrahl entsprechend steuert. Dabei kann schrittweise vorgegangen werden, wobei der Computer immer wieder die sich mit der Abtragung ändernden Istsignale mit der Sollsignalform vergleicht. Es sind aber auch mechanische Abtragverfahren möglich.

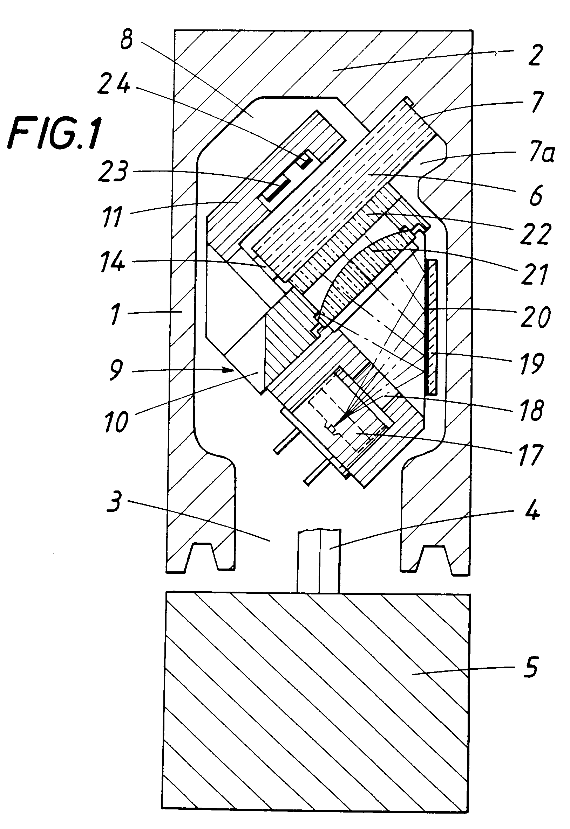

Die Erfindung wird anhand der nachfolgenden Zeichnungsbeschreibung näher erläutert. In der Zeichnung ist der Erfindungsgegenstand beispielsweise veranschaulicht. Es zeigen
- Fig. 1: einen Querschnitt durch ein lineares Inkrementalmeßsystem,

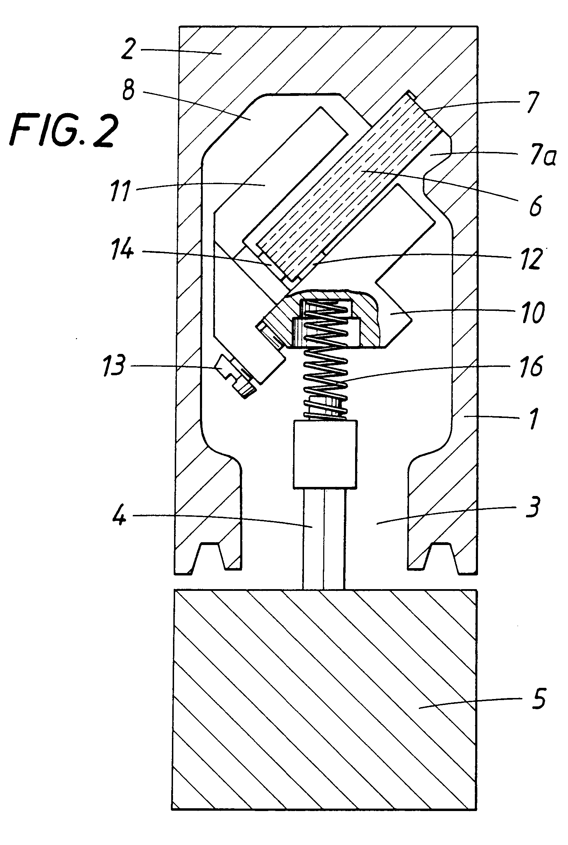

- Fig. 2: einen parallel zum Schnitt der Fig. 1 geführten Schnitt durch das Meßsystem,
- Fig. 3: eine Teildraufsicht auf die Abtasteinheit,
- Fig. 4: eine Ansicht der Anordnung der fotoelektrischen Empfänger und
- Fig. 5: eine Ansicht der Reflexionsschicht des als Spiegel ausgebildeten Reflektors.

Für das Meßsystem ist ein rohrförmiges Schutzgehäuse 1 vorgesehen, dessen Decke 2 zu einem Träger verstärkt ist. Unten besitzt das Gehäuse 1 eine schlitzförmige Öffnung 3, die üblicherweise durch nicht dargestellte, gegeneinander drückende Dichtlippen verschlossen ist, durch die ein schwertförmiger Mitnehmer 4 eines verstellbaren Teiles 5 hindurchgreift, der mit jenem Teil gekuppelt ist, dessen Länge bzw. Längsverschiebung gegenüber dem feststehenden Maßstab zu messen ist.

Ein im Querschnitt flach rechteckiger Maßstabkörper 6 aus transparentem Material, insbesondere Glas, ist am Übergang der einen Seitenwand zur Decke 2 des rohrförmigen Schutzgehäuses 1 mit dem einen Längsrand in eine Nut 7 eingesetzt und dort durch eine elastische Halterung, z.B. einen Kleber, eine Dichtmasse oder eine in den freibleibenden Teil 7a der Nut 7 eingedrückte Gummischnur gehalten. Der Großteil des Maßstabkörpers 6 ragt unter einem Winkel von 45° in den Hohlraum 8 des Schutz- und Trägergehäuses 1 ein. Der Maßstabkörper 6 trägt beim Ausführungsbeispiel in einer Spur eine aus feinen Teilstrichen bestehende inkrementale Meßteilung, wobei in einer zweiten Spur Referenzmarken vorgesehen sein können. Inkrementale Meßteilungen werden derzeit mit Teilungsschritten bis in den Mikrometerbereich hergestellt.

Für die Ablesung des Maßstabes und für die Erzeugung von analogen Meßsignalen aus dieser Abtastung dient eine Abtasteinheit 9. Diese Abtasteinheit besteht beim Ausführungsbeispiel aus zwei Hauptkörpern 10, 11, von denen der eine (10) mit zwei Laufrollen bildenden Kugellagern 12 an der unteren Flachseite und der andere (11) mit zwei weiteren Kugellagern 14 an der unteren Schmalseite des Trägerkörpers abgestützt ist. Der Hauptkörper 10 kann gegenllber dem Hauptkörper 11 mit Hilfe von Stellschrauben 13, 15 eingestellt und mit weiteren Schrauben nach der Einstellung festgestellt werden. Sinn dieser Einstellung ist es, eine am Teil 10 vorgesehene optische Beleuchtungseinrichtung gegenüber am Teil 11 angebrachten Empfängern einzustellen.

Die Kugellager 12, 14 werden durch eine oder mehrere sich am Mitnehmer 4 abstützende Druckfedern 16 mit den von der unteren Frontseite und der unteren Schmalseite gebildeten Führungsflächen des Maßstabkörpers 6 in Eingriff gehalten. Die Längsmitnahme der Abtasteinheit 9 vom Mitnehmer erfolgt vorzugsweise über bleibend miteinander in Eingriff stehende Dauermagnete oder Magnet-Ankerkombinationen, deren zueinander weisende Seiten einander kreuzen und gewölbt sind, so daß punktförmige Berührungsstellen entstehen.

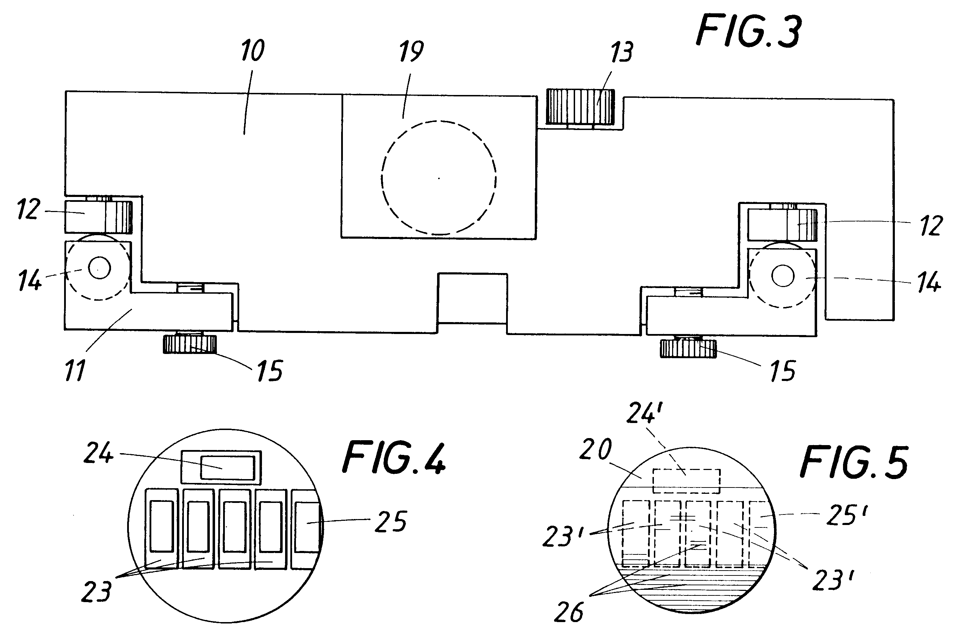

Beim Ausführungsbeispiel besteht die Beleuchtungseinrichtung aus einer Leuchtdiode 17, die durch eine Lochblende 18 hindurch einen Lichtkegel abstrahlt. Ein ebenfalls am Teil 10 befestigter Spiegel 19 mit aus aufgedampftem Edelmetall, insbesondere Gold, bestehender Reflexionsfläche faltet den von der Lichtquelle 17 abgegebenen Lichtkegel und strahlt ihn zu einer Kondensoranordnung 21 ab, aus der dann im wesentlichen parallelgerichtetes Licht austritt. Eine mit Abtastgittern ausgestattete Abtastplatte 22, die gegeneinander um Teilungsbruchteile versetzte Abtastgitter und ein weiteres Abtastgitter für Referenzmarken in der Referenzspur enthält, wird von der Abtasteinheit 9 am Maßstabkörper 6 geführt. Die Beleuchtungseinrichtung 17 - 22 beleuchtet durch die Abtastgitter die Meßteilung, wobei das durch Abtastgitter und Meßteilung hindurchtretende Licht durch den Maßstabkörper 6 auf im Teil 11 angebrachte fotoelektrische Empfänger 23, 24, 25 fällt. Die Empfänger 23 (siehe Fig. 4) sind für die Erzeugung von gegeneinander phasenversetzten Meßsignalen bestimmt, die im Idealfall die relativen Phasenlagen 0°, 90°, 180° und 270° aufweisen. Durch paarweise Antiparallelschaltung von Empfängerpaaren werden im Normalfall zwei um 90° phasenverschobene Ausgangssignale erzeugt und der weiteren Verarbeitung zugeführt.

Der Empfänger 24 ist der Referenzspur des Maßstabkörpers 6 zugeordnet und für die Erzeugung eines Referenzimpulses beim Überfahren einer Referenzmarke bestimmt. Der fotoelektrische Empfänger 25 dient dazu, die mittlere Helligkeit zu erfassen, aus der auf die momentane Leistungsfähigkeit der Lichtquelle geschlossen werden kann und durch die auch ein Abfall der Beleuchtungsstärke der Empfänger infolge von Alterung oder Verschmutzung festgestellt werden kann, wobei auch ein Bezugspegel für den Referenzimpuls festgelegt werden kann.

Für den Abgleich des Meßsystems werden vorzugsweise zunächst solange Einstellungen des Teiles 10 gegenllber dem Teil 11 vorgenommen, bis an den Empfängern 23 - 25 der maximale. Signalpegel auftritt. Anschließend werden Signalhöhe, Phasenlage und Signalform durch Abtragen von Bereichen der Reflexionsschicht 20 insbesondere mit Hilfe eines Laserstrahles eingestellt. In Fig. 5 ist dazu schematisch die Reflexionsschicht 20 des Reflektors gezeigt, auf der die empirisch ermittelten Reflexionsbereiche, welche den Empfängern 23, 24, 25 zugeordnet sind, strichliert in ihren Umrissen angedeutet und mit 23', 24', 25' bezeichnet sind. Zur Beeinflussung des Signalabgleiches, des Phasenabstandes und der Signalform der an den fotoelektrischen Empfängern (23 - 25) auftretenden Signale werden bei der Ausführung nach Fig. 5 Teilbereiche der Reflexionsschicht mit Hilfe eines durch einen Computer gesteuerten Laserstrahles nach einem vorgegebenen Programm nach Linien 26 abgetragen. Es wäre auch eine punkt- oder flächenförmige Abtragung möglich, wobei etwa durch Abtragung der Reflexionsschicht im Seitenrandbereich der Umrisse 23' die Phasenlage und auch die Signalform beeinflußt werden können.

Für die Feststellung der Bereiche 23' - 25' kann man die Konstruktionszeichnung heranziehen. Einfacher und häufig auch genauer ist es Jedoch, die Reflexionsschicht 20 für die Ermittlung der genannten Bereiche durch eine lichtempfindliche Schicht zu ersetzen und diese Schicht mit Hilfe von Parallellicht zu belichten, das durch die Fotozellen 23 - 25 ersetzende und ihnen in ihrer Umrißform angepaßte Lochblenden durch Maßstab 6, Abtastplatte 22 und Kondensor 21 eingeleitet wird. Nach Entwicklung der lichtempfindlichen Schicht hat man eine Abbildung der interessierenden reflektierenden Bereiche.

## Patentansprüche

1. Inkrementales Meßsystem, insbesondere Längenmeßsystem, mit einem in wenigstens einer Spur eine Meßteilung tragenden Maßstabkörper (6), der an dem einen Längsrand getragen in einem einen Durchführungsschlitz (3) für einen Mitnehmer (4) aufweisenden, rohrförmigen Schutz- und Trägergehäuse (1) untergebracht ist, und einer parallel zum Maßstab geführten Abtasteinheit (9) mit einer gemeinsamen Lichtquelle (17), die über eine Kondensoreinrichtung (21) aufweisende optische Leiteinrichtungen (18 - 21) durch den Maßstabkörper (6) und die Meßteilung hindurch fotoelektrische Empfänger (23, 24, 25) der Abtasteinheit (9) über ihnen zugeordnete Abtastgitter (22) für die Meßteilung mit zumindest im wesentlichen parallelgerichtetem Licht beleuchtet, dadurch gekennzeichnet, daß der im Querschnitt rechteckige Maßstabkörper (6) schräg geneigt an der vom Schlitz (3) abweisenden Seite in den Hohlraum (8) des Trägergehäuses (1) einragt, daß der die fotoelektrischen Empfänger (23, 24, 25) tragende Teil (11) der Abtasteinheit (9) an der vom Gehäuseschlitz (3) abweisenden Seite des Maßstabkörpers (6) angeordnet ist und daß der Lichtkegel der an der anderen Maßstabseite zwischen Gehäuseschlitz und Maßstab angeordneten Lichtquelle (17) zwischen Lichtquelle und Kondensor (21) durch wenigstens einen Reflektor (19, 20) gefaltet ist.

2. Meßsystem nach Anspruch 1, dadurch gekennzeichnet, daß die Hauptabstrahlachse der Lichtquelle (17) parallel zur Hauptebene des Maßstabkörpers (6) gerichtet ist und daß die Lichtquelle und der eine vertikale Reflexionsfläche (20) aufweisende Reflektor (19) innerhalb des von der Vertikalprojektion durch die Außenränder des unter 45° geneigt in den Hohlraum (8) des Trägerhäuses (1) einragenden Maßstabkörpers (6) bestimmen Raumes untergebracht sind.

3. Meßsystem nach Anspruch 1 oder 2, dadurch gekennzeichnet, daß bei mit Gleitern oder Rollen (12, 14) unmittelbar am Maßstabkörper (6) geführter Abtasteinheit (9) die Abtastgitter in einer Abtastplatte (22) an der zum Kondensor (21) weisenden Maßstabseite vorgesehen und mit Lichtquelle (17), Reflektor (19) und Kondensor (21) in einem relativ zu dem die Fotoelemente (23, 24, 25) tragenden Teil (11) der Abtasteinheit (9) einstellbaren Bauteil (10) angebracht sind.

4. Meßsystem nach Anspruch 3, dadurch gekennzeichnet, daß der die Abtastplatte (22) tragende Bauteil (10) sich mit eigenen Gleitern oder Rollen (12) am Maßstab (6) abstützt und zumindest parallel zu der zur Abtastplatte weisenden Seite des Maßstabes durch Verstellung in Maßstablängs- und bzw. oder -querrichtung, bzw. durch Verdrehung um eine normal zum Maßstabkörper gerichtete Achse einstellbar ist.

5. Meßsystem nach Anspruch 4, dadurch gekennzeichnet, daß der die Fotoelemente (23, 24, 25) tragende Teil (11) der Abtasteinheit (9) sich ebenfalls mit eigenen Gleitern oder Rollen (14) am Maßstabkörper abstützt.

6. Meßsystem nach Anspruch 4 oder 5, dadurch gekennzeichnet, daß die Rollen (12, 14) als Miniaturkugellager ausgebildet sind.

7. Verfahren zum Abgleich der photoelektrischen Empfänger (23, 24) bei einem inkrementalen Meßsystem nach einem der Ansprüche 1 bis 6, dadurch gekennzeichnet, daß die mögliche Beleuchtungsstärke der photoelektrischen Empfänger (23, 24) individuell durch Änderung der Reflexionseigenschaften der das Licht der Lichtquelle (17) über den Kondensor (21) auf die einzelnen Abtastgitter (22) und die diesen zugeordneten Empfänger (23, 24) reflektierenden Bereiche (23', 24') des den Lichtkegel faltenden Reflektors (20) eingestellt wird.

8. Verfahren nach Anspruch 7, dadurch gekennzeichnet, daß auch die Phasenabstände der an den fotoelektrischen Empfängern (23) auftretenden Signale durch Änderung der Reflexionseigenschaften der diesen Empfängern zugeordneten Bereiche (23') des Reflektors (20) eingestellt werden.

9. Verfahren nach Anspruch 7 oder 8, dadurch gekennzeichnet, daß vor dem Abgleichen der Empfänger (23, 24) durch Änderung der Reflexionseigenschaften der zugeordneten Bereiche (23', 24') des Reflektors (20) der die Abtastplatte (22) tragende Bauteil (10) gegenüber dem die Fotoelemente (23, 24, 25) tragenden Teil (11) der Abtasteinheit (9) eingestellt wird, bis an den Empfängern ein bestimmter, insbesondere maximaler, Signalpegel auftritt.

10. Verfahren nach einem der Ansprüche 7 - 9 dadurch gekennzeichnet, daß die den einzelnen Empfängern (23, 24) bzw. Abtastgittern der Abtastplatte zugeordneten Reflexionsbereiche (23', 24') des Reflektors (20) empirisch durch Beleuchtung des Reflektors mit Parallellicht durch eine die fotoelektrischen Empfänger ersetzende und entsprechend den Empfängern Lochblenden aufweisende Maske ermittelt werden.

11. Verfahren nach einem der Ansprüche 7 - 10, dadurch gekennzeichnet, daß die Reflexionseigenschaften durch gezieltes Abdampfen von Bereichen (26) der Reflexionsschicht (20) des als Spiegel (19) ausgebildeten Reflektors mittels eines gesteuerten Laserstrahles verändert werden.

## Claims

1. An incremental measuring system, more particularly a length-measuring system, comprising a scale member (6) bearing divisions along at least one track and held along one longitudinal edge in a tubular protective and supporting casing (1) comprising a slot (3) for inserting a cam (4), the system also comprising a scanning unit (9) guided parallel to the scale and having a common light source (17) which, via optical guide devices (18 - 20) comprising a condenser device (21), illuminates photoelectric receivers (23, 24, 25) in the scanning unit (9) through the scale member (6) and the divisions, with at least substantially parallel light via associated scanning grids (22) for the divisions, characterised in that the scale member (6), which has a rectangular cross-section, projects into the cavity (8) of the casing (1) at an angle on the side remote from the slot (3), the part (11) of the scanning unit (9) bearing the photoelectric receivers (23, 24, 25) is disposed on the side of the scale member (6) remote from the slot (3), and the light cone from the light source (17) disposed on the other side of the scale between the scale and the slot is bent by at least one reflector (19, 20) between the light source and the condenser (21).

2. A measuring system according to claim 1, characterised in that the main axis of radiation of the light source (17) extends parallel to the main plane of the scale member (6), and the light source and the reflector (19), which has a vertical reflecting surface (20), are disposed in the space defined by the vertical projection through the outer edges of the scale member (6) projecting at an angle of 45° into the cavity (8) of the casing (1).

3. A measuring system according to claim 1 or 2, characterised in that in the case of a scanning unit (9) guided by slides or rollers (12, 14) directly on the scale member (6), the scanning grids are provided in a plate (22) on the side of the scale pointing towards the condenser (21) and, together with the light source (17), reflector (19) and condenser (21), are disposed in a component (10) adjustable relative to the part (11) of the scanning unit (9) bearing the photoelements (23, 24, 25).

4. A measuring system according to claim 3, characterised in that the component (10) bearing the scanning plate (22) has separate slides or rollers (12) bearing on the scale (6) and is adjustable at least parallel to the side of the scale pointing towards the scanning plate, by adjustment in the longitudinal and/or transverse direction of the scale or by rotation around an axis at right angles to the scale member.

5. A measuring system according to claim 4, characterised in that the part (11) of the scanning unit (9) bearing the photoelements (23, 24, 25) also has slides or rollers (14) bearing against the scale member.

6. A measuring system according to claim 4 or 5, characterised in that the rollers (12, 14) are miniature ball bearings.

7. A method of compensating the photoelectric receivers (23, 24) in an incremental measuring system according to any of claims 1 to 6, characterised in that the possible intensity of illumination of the photoelectric receivers (23, 24) is individually adjusted by altering the reflecting properties of the regions (23', 24') of the reflector (20) bending the light cone which reflect the light from the light source (17) through the condenser (21) on to the individual scanning grids (22) and the associated receivers (23, 24).

8. A method according to claim 7, characterised in that the phase intervals between the signals occurring at the photoelectric receivers (23) are also adjusted by altering the reflecting properties of the regions (23') of the reflector (20) associated with these receivers.

9. A method according to claim 7 or 8, characterised in that before the receivers (23, 24) are compensated by altering the reflecting properties of the associated regions (23', 24') of the reflector (20), the component (10) bearing the scanning plate (22) is adjusted relative to the part (11) of the scanning unit (9) bearing the photoelements (23, 24, 25) until a given, more particularly maximum, signal level occurs at the receivers.

10. A method according to any of claims 7 to 9, characterised in that the reflecting regions (23', 24') of the reflector (20) associated with the individual receivers (23, 24) or scanning grids of the scanning plate are empirically determined by illuminating the reflector with parallel light through a mask which replaces the photoelectric receivers and has pinhole diaphragms corresponding to the receivers.

11. A method according to any of claims 7 to 10, characterised in that the reflecting properties are altered by controlled evaporation of regions (26) of the reflecting layer (20) of the reflector in the form of a mirror (19), using a controlled laser beam.

## Revendications

1. Système de mesure incrémentiel, en particulier système de mesure de longueur, avec un corps de règle graduée (6), portant, sur au moins une piste, une règle graduée et logé, en étant porté sur un bord longitudinal, dans un boîtier de protection et de support (1) tubulaire, présentant une fente de passage (3) pour un organe d'entraînement (4), et avec une unité d'exploration (9) guidée parallèlement à la règle graduée, avec une source lumineuse (17) commune, illuminant avec une lumière orientée au moins pratiquement parallèlement, par l'intermédiaire de dispositifs de guidage (18 à 21) optiques, présentant un dispositif condensateur (21), en passant à travers le corps de règle graduée (6) et la graduation de mesure, pour éclairer des récepteurs photoélectriques (23, 24, 25) de l'unité d'exploration (19), par l'intermédiaire de leurs grilles d'exploration (22) associées, pour la graduation de mesure,
caractérisé en ce que le corps de la règle graduée (6), dont la section est transversale et rectangulaire, pénètre obliquement, sur le côté opposé à la fente (3), dans l'espace vide (8) du boîtier support (1), en ce que la partie (11), portant les récepteurs photoélectriques (23, 24, 25), de l'unité d'exploration (9) est disposée du côté du corps de règle graduée (6) opposé à la fente de boîtier (3) et en ce que le cône lumineux de la source lumineuse (17), disposée de l'autre côté de la règle graduée, entre la fente de boîtier et la règle graduée, est dévié entre la source lumineuse et le condensateur (21) à l'aide d'au moins un réflecteur (19, 20).

2. Système de mesure selon la revendication 1, caractérisé en ce que l'axe principal de rayonnement de la source lumineuse (17) est orienté parallèlement au plan principal du corps de règle graduée (6) et en ce que la source lumineuse et le réflecteur (19), présentant une surface de réflexion (20) verticale, sont logés à l'intérieur de l'espace déterminé par la projection verticale passant par les bords extérieurs du corps de règle graduée (6) pénétrant dans l'espace creux (8) du boîtier support (1) en faisant un angle de 45°.

3. Système de mesure selon la revendication 1 ou 2, caractérisé en ce que, dans le cas où l'unité d'exploration (9) est guidée à l'aide de patins ou de galets (12, 14), directement sur le corps de règle graduée (6), la grille d'exploration est prévue dans une plaque d'exploration (22), placée du côté de la règle graduée tournée vers le condensateur (21), et, conjointement avec la source lumineuse (17), le réflecteur (19) et le condensateur (21), ces éléments étant montés dans un élément de construction (10) réglable par rapport à la partie (11) de l'unité d'exploration (9) qui porte les photo-éléments (23, 24, 25).

4. Système de mesure selon la revendication 3, caractérisé en ce que l'élément de construction (10) portant la plaque d'exploration (22) prend appui sur la règle graduée (6) à l'aide de patins ou de galets (12) propres et est réglable, au moins parallèlement par rapport à la face tournée vers la plaque d'exploration de la règle graduée, par un déplacement de réglage dans la direction longitudinale et/ou transversale de la règle graduée, respectivement par rotation autour d'un axe orienté perpendiculairement au corps de la règle graduée.

5. Système de mesure selon la revendication 4, caractérisé en ce que la partie (11), portant les photo-éléments (23, 24, 25) de l'unité d'exploration (9), prend appui également sur le corps de règle graduée à l'aide de patins ou de galets (14) propres.

6. Système de mesure selon la revendication 4 ou 5,
caractérisé en ce que les galets (12, 14) sont réalisés sous forme de roulements à billes miniatures.

7. Procédé de réglage des récepteurs photoélectriques (23, 24) dans un système de mesure incrémentiel, selon l'une des revendications 1 à 6,
caractérisé en ce que l'intensité lumineuse possible des récepteurs photoélectriques (23, 24) est réglée individuellement par modification des propriétés de réflexion des zones (23', 24') du réflecteur (20) déviant le cône lumineux et réfléchissant la lumière de la source lumineuse (17) par l'intermédiaire du condensateur (21), sur les différentes grilles d'exploration (22) et les récepteurs (23, 24), lui étant associés.

8. Procédé selon la revendication 7,
caractérisé en ce que les espacements entre phases des signaux survenant sur les récepteurs photoélectriques (23, 24) sont réglés par modification des propriétés de réflexion des zones (23') associées à ces récepteurs du réflecteur (20).

9. Procédé selon la revendication 7 ou 8,
caractérisé en ce qu'avant réglage des récepteurs (23, 24), on règle par modification des propriétés de réflexion des zones (23', 24') associées du réflecteur (20), l'élément de construction (10) portant la plaque d'exploration (22) par rapport à la partie (11), portant les photo-éléments (23, 24, 25), de l'unité d'exploration (9), jusqu'à ce qu'un niveau de signal déterminé, en particulier maximal survienne aux récepteurs.

10. Procédé selon l'une des revendications 7 ou 9,
caractérisé en ce que les zones de réflexion (23' 24'), associées aux différents récepteurs (23, 24), ou grilles d'exploration de la plaque d'exploration, du réflecteur (20), sont déterminées par illumination du réflecteur avec une lumière parallèle, au moyen d'un masque remplaçant les récepteurs photoélectriques et présentant des écrans percés de manière correspondant aux récepteurs.

11. Procédé selon l'une des revendications 7 ou 10,
caractérisé en ce que les propriétés de réflexion sont modifiées par enlèvement par volatilisation, opéré à dessein de zones de la couche de réflexion (20) du réflecteur réalisé sous forme de miroir (19) au moyen d'un rayon laser commandé.
